# EUROPÄISCHE PATENTSCHRIFT

(11) **EP 2 143 617 B1**
(45) Veröffentlichungstag und Bekanntmachung des Hinweises auf die Patenterteilung: **20.06.2012**
(21) Anmeldenummer: 09007054.1
(22) Anmeldetag: 27.05.2009
(51) Int. Cl.: B62D 7/00, B62D 1/20

(54) **Nutzfahrzeugchassis mit am Chassis befestigtem Lenkgetriebe**
Commercial vehicle chassis with steering gear fixed to the chassis
Châssis de véhicule utilitaire avec boîtier de direction fixé au châssis

(30) Priorität: 12.07.2008 DE 102008032951
(43) Veröffentlichungstag der Anmeldung: 13.01.2010
(73) Patentinhaber: MAN Truck & Bus AG, 80995 München (DE)
(72) Erfinder: Deutsch, Uwe, 38315 Schladen (DE); Kreisel, Markus, 86495 Eurasburg (DE); Eberle, Andreas, 80687 München (DE); Lamche, Oliver, 82140 Olching (DE); Jablonski, Sascha, 82140 Olching (DE); Vrecko, Alexander, 80993 München (DE)

(56) Entgegenhaltungen:
- EP-A2- 1 873 038
- DE-A1- 2 917 660
- DE-A1- 2 920 308
- GB-A- 1 079 160

## Beschreibung

Die Erfindung betrifft ein Nutzfahrzeugchassis, dessen Lenkgetriebe in Fahrtrichtung gesehen im Bereich der Vorderachsen am Fahrzeug befestigt ist und zur Ausführung der Lenkbetätigung über eine Gelenkwelle mit einem am Fahrerarbeitsplatz angeordneten Lenkrad verbunden ist. Hersteller von Bussen liefern die Chassis der Fahrzeuge an Aufbauhersteller zur Montage der Bussaufbauten. Die Entscheidung, ob das Fahrzeug als Linkslenker- oder als Rechtslenkerfahrzeug ausgeliefert wird, richtet sich also nach der Entscheidung des Aufbauherstellers. Das fahrbare Nutzfahrzeugchassis wird unabhängig von der letztendlichen Bestimmung des Fahrzeugs als Linkslenker oder Rechtslenker an den Aufbauhersteller ausgeliefert. Die Anordnung des Fahrerarbeitsplatzes sowie die Anordnung des Lenkgetriebes quer zur Fahrtrichtung müssen daher vom Aufbauhersteller vor der Auslieferung des Fahrzeugs entsprechend der letztendlichen Verwendung angepasst werden. Ein Umbau des Fahrzeuggerippes zur bestimmungsgemäßen Platzierung des Fahrerarbeitsplatzes auf der linken oder rechten Seite des Fahrzeugs muss durch den Aufbauhersteller durchgeführt werden. Dieser Umbau sowie die Anpassung der Position des Lenkgetriebes an die Position des endgültigen Fahrerarbeitsplatzes sind kosten- und zeitaufwendig.

Die Erfindung stellt sich daher die Aufgabe, ein Nutzfahrzeugchassis zu schaffen, bei dem die Positionierung des vorläufigen Fahrerarbeitsplatzes quer zur Fahrtrichtung und die Anordnung des Lenkgetriebes unabhängig gestellt sind von der bestimmungsgemäßen Anforderung des Fahrzeugs als Rechts- oder als Linkslenker.

Aus der DE 2920308 ist eine Lenkung für einen Lastkraftwagen oder einen Omnibus mit einem über ein Lenkrad betätigbaren, gegebenenfalls die Lenkkraft verstärkenden Lenkgetriebe bekannt. Darüber hinaus ist eine die Lenkbewegung vom Lenkgetriebe auf die Spurstangen übertragende Lenkstange bekannt, die das im vorderen Bereich des Fahrzeugs angeordnete Lenkgetriebe mit einem mit den Spurstangen in Wirkverbindung stehenden Lenkhebel verbindet. Das Lenkgetriebe ist seitlich neben dem Lenkrad etwa in der Mitte des Fahrzeugs angeordnet und durch das Lenkrad über Getriebemittel betätigbar.

Aus der DE2920308, die den nächstliegenden Stand der Technik bildet, ist ein Nutzfahrzeugchassis bekannt, dessen Lenkgetriebe in Fahrtrichtung gesehen im Bereich einer Vorderachse am Fahrzeug befestigt ist und zur Ausführung der Lenkbetätigung über eine Lenkungsgelenkwelle mit einem Lenkrad verbunden ist, wobei die Lenkungsgelenkwelle zum Ausgleich eines veränderbaren Abstands des Lenkrads zum Lenkgetriebe eine veränderliche Länge aufweist.

Die Erfindung wird durch die kennzeichnenden Merkmale des Anspruchs 1 gelöst. Das Lenkgetriebe kann im Bereich der Vorderachse, nämlich in Fahrtrichtung gesehen vor, hinter oder auf dem Achskörper der wenigstens einen Vorderachse befestigt sein. Die Befestigung des Lenkgetriebes erfolgt dabei an solchen Stellen am Fahrzeug, die möglichst in der Nähe des Fahrersitzes liegen. Denkbar ist, das Lenkgetriebe z. B. unterhalb des Bodens der Fahrerkabine zu positionieren. Es ist aber auch jede andere Stelle im Bereich unter dem Fahrerhaus oder im Bereich der Vorderachse vorstellbar. Das Lenkgetriebe des Fahrzeugs, das die Drehbewegung in die Schwenkbewegung der Räder umwandelt ist je nach den räumlichen Gegebenheiten des Fahrzeugs in der Ebene der Rahmenlängsträger oder darunter befestigt. Zur Umsetzung der Drehbewegung des Lenkrades in die Schwenkbewegung der Räder ist das Lenkgetriebe über eine Lenkungsgelenkwelle mit dem Lenkrad verbunden. Unabhängig von der Position des Lenkgetriebes gegenüber den Rahmenlängslenkem kann der provisorische Fahrerarbeitsplatz in Fahrtrichtung gesehen links, mittig zwischen oder rechts neben den Rahmenlängsträgern am Fahrzeug befestigt sein. Die mittige Anordnung des Fahrerarbeitsplatzes zur Überführung des Nutzfahrzeugchassis hat den Vorteil, dass der vorläufige Fahrerarbeitsplatz beim Aufbauhersteller lediglich aus seiner mittigen Anordnung auf dem Chassis entfernt werden muss. Der Aufbauhersteller ist nun frei in seiner Entscheidung, je nach Wunsch des Endabnehmers des Fahrzeugs den Arbeitsplatz des Fahrers in seiner endgültigen Form in Fahrtrichtung gesehen auf der rechten oder linken Seite des Fahrzeugs einzubauen. Allein durch die Veränderung der Länge der Gelenkwelle kann der vorläufige Arbeitsplatz links, mittig zwischen oder rechts neben den Längsträgern positioniert werden, unabhängig davon, wo das Lenkgetriebe in Bezug zu dem Längsträger im Bereich der Vorderachse angeordnet ist. Die Vergrößerung oder Verringerung des Abstandes zwischen dem provisorischen Fahrerarbeitsplatz und dem Lenkgetriebe wird durch die Längenveränderung der Lenkungsgelenkwelle ausgeglichen. In einer anderen Ausführungsform der Erfindung ist der Fahrerarbeitsplatz im Bereich der Vorderachse angeordnet. Er kann vor, hinter oder auf einer von mehreren Vorderachsen angeordnet sein.

Das erfindungsgemäße Nutzfahrzeugchassis ist nicht auf eine Fahrgestellkonstruktion beschränkt, die auf Rahmenlängsträgern basiert. Vielmehr können auch beliebige andere Chassisstrukturen Verwendung finden. Denkbar sind z. B. Low-Entry-Fahrzeuge mit Vorderachsträger-Fahrgestellen beziehungsweise Fahrgestellen in Integrallbauweise.

Vorteilhalfte Ausführungsformen ergeben sich aus den abhängigen Ansprüchen.

Weitere Merkmale, Einzelheiten und Vorteile der Erfindung ergeben sich aus der folgenden Beschreibung verschiedener Ausführungsformen der Erfindung sowie anhand der Zeichnung. Hierbei zeigen:
- Fig. 1: ein Vorderachsmodul mit linksseitigem Lenkgetriebe und linksseitigem Fahrerar- beitsplatz,
- Fig. 2: ein Vorderachsmodul mit linksseitigem Lenkgetriebe und mittig zwischen den Längsträgern angeordnetem Fahrerarbeitsplatz,
- Fig. 3: ein Vorderachsmodul mit linksseitigem Lenkgetriebe und rechtsseitigem Fahrer- arbeitsplatz.
- Fig. 4: ein Vorderachsmodul mit rechtsseitigem Lenkgetriebe und rechtsseitig angeord- netem Fahrerarbeitsplatz,
- Fig. 5: ein Vorderachsmodul mit rechtsseitigem Lenkgetriebe und mittigem Fahrerar- beitsplatz,
- Fig. 6: ein Vorderachsmodul mit rechtsseitigem Lenkgetriebe und linksseitigem Fahrer- arbeitsplatz,
- Fig. 7: ein Vorderachsmodul mit mittig zwischen den Längsträgern angeordnetem Lenk- getriebe und linksseitigem Fahrerarbeitsplatz,
- Fig. 8: ein Vorderachsmodul mit mittig zwischen den Längsträgern angeordnetem Lenk- getriebe und mittig angeordnetem Fahrerarbeitsplatz und
- Fig. 9: ein Vorderachsmodul mit mittig zwischen den Längsträgern angeordnetem Lenk- getriebe und rechtsseitig angeordnetem Fahrerarbeitsplatz.

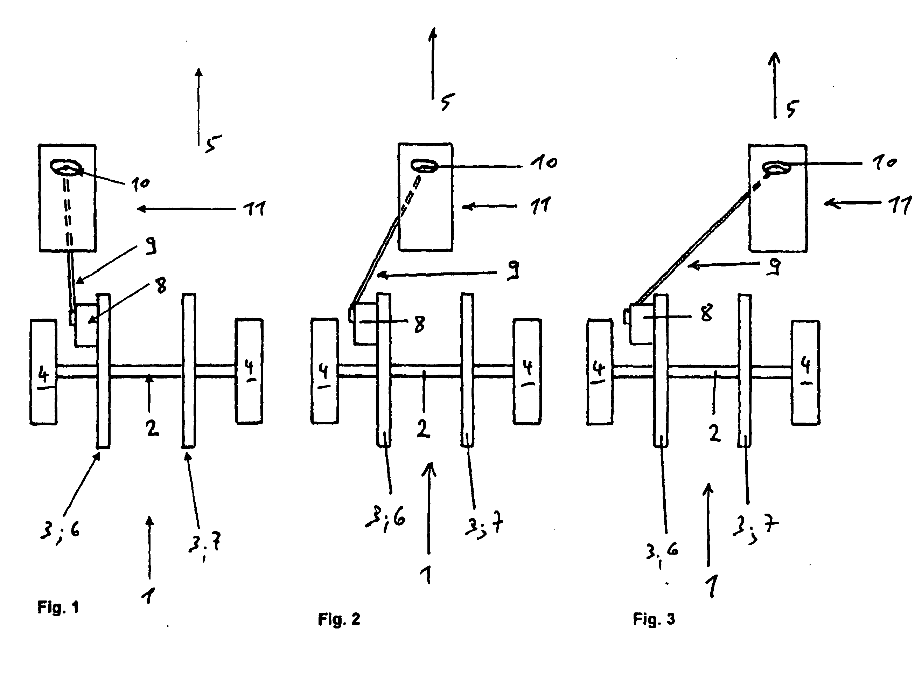

Die Figuren 1 bis 3 zeigen ein Vorderachsmodul 1, das die Vorderachse 2, die Längsträger 3 und die Räder 4 der Vorderachse 2 umfasst. In Fahrtrichtung 5 gesehen sind der linke Längsträger mit Ziffer 6 und der rechte Längsträger mit Ziffer 7 bezeichnet. An dem Längsträger 3 ist in den Figuren 1 bis 9 ein Lenkgetriebe 8 befestigt, das über eine Lenkungsgelenkwelle 9 mit dem Lenkrad 10 des vorläufigen Fahrerarbeitsplatzes 11 verbunden ist.

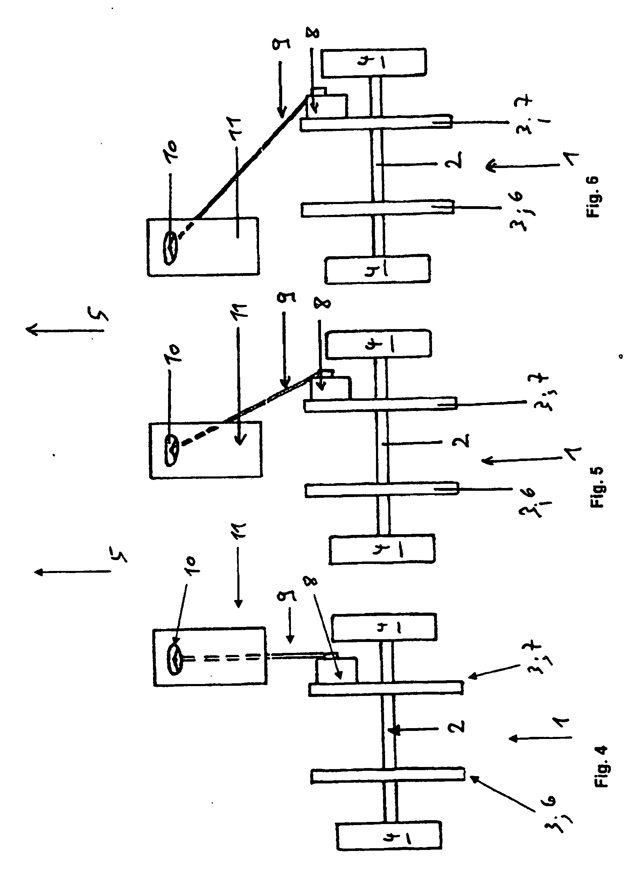

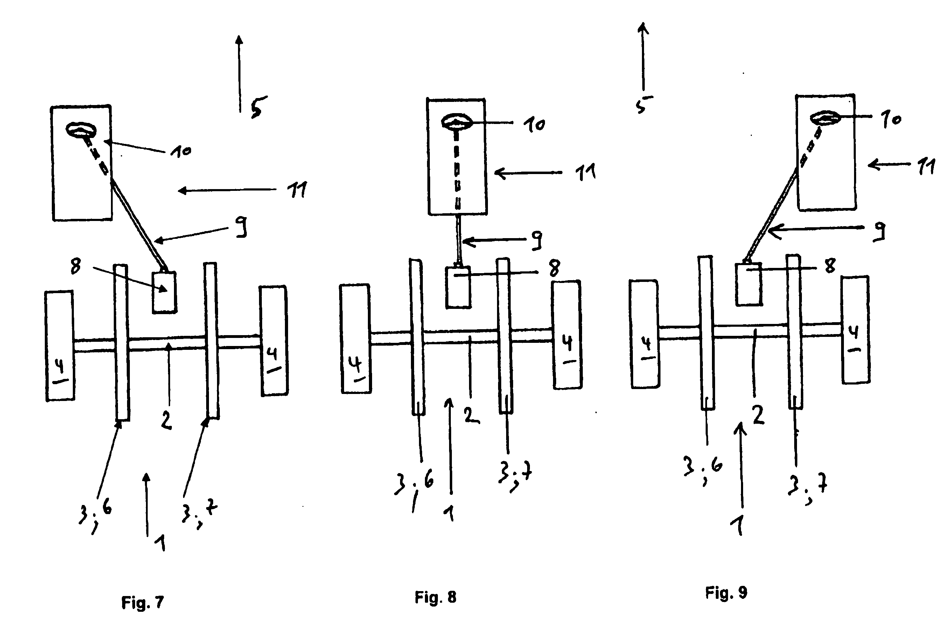

In den Figuren 1 bis 3 weist das Vorderachsmodul 1 ein jeweils an der Außenseite des linken Längsträgers 6 befestigtes Lenkgetriebe 8 auf. In den Figuren 4 mit 6 ist das Lenkgetriebe 8 jeweils an der Außenseite des Längsträgers 7 befestigt. Die Anordnung des Lenkgetriebes 8 befindet sich demgegenüber in den Fig. 7 bis 9 in einer Position zwischen den Längsträgern 6 und 7. Bedingt durch die jeweilige Position des Lenkgetriebes 8 gegenüber der jeweiligen Anordnung des provisorischen Fahrerarbeitsplatzes 11 In Bezug zur Fahrtrichtung 5 ist die erforderliche Länge der Lenkungsgelenkwelle 9 zur Verbindung des Lenkgetriebes 8 mit dem Lenkrad 10 in den Figuren 1; 4 und 8 am kürzesten. Die Lenkungsgelenkwelle nimmt eine mittlere Länge ein in den Figuren 2; 5; 7 und 9. Die jeweils längste Ausdehnung erfährt die Lenkungsgelenkwelle in den Figuren 3 und 6.

### Bezugsziffern:

- 1: Vorderachsmodul
- 2: Vorderachse
- 3: Längsträger
- 4: Räder
- 5: Fahrtrichtung
- 6: Längsträger (links)
- 7: Längsträger (rechts)
- 8: Lenkgetriebe
- 9: Lenkungsgelenkwelle
- 10: Lenkrad
- 11: provisorischer Fahrerarbeitsplatz

## Patentansprüche

1. Nutzfahrzeugchassis, dessen Lenkgetriebe (8) in Fahrtrichtung (5) gesehen im Bereich einer Vorderachse (2) am Fahrzeug befestigt ist, zur Ausführung der Lenkbetätigung über eine Lenkungsgelenkwelle (9) mit einem an einem vorläufigen Fahrerarbeitsplatz (11) angeordneten Lenkrad (10) verbunden ist und unabhängig von einer Linkslenkung oder einer Rechtslenkung des Fahrzeugs in einer von der jeweiligen Position des Fahrerarbeitsplatzes (11) unabhängigen Lage am Chassis befestigt ist, wobei die Lenkungsgelenkwelle (9) zum Ausgleich eines veränderbaren Abstands des Lenkrads (10) zum Lenkgetriebe (8) eine veränderliche Länge aufweist, durch die der vorläufige Fahrerarbeitsplatz (11) links neben, mittig zwischen oder rechts neben den Längsträgern (3; 6; 7) positioniert werden kann, unabhängig davon, wo das Lenkgetriebe (8) in Bezug zu den Längsträgern (3; 6; 7) im Bereich der Vorderachse (2) angeordnet **ist.**

2. Nutzfahrzeugehassis nach Anspruch 1, **dadurch gekennzeichnet, dass** das Lenkgetriebe (8) an einer Vorderachse (2) angeordnet ist

3. Nutzfahrzeugchassis nach Anspruch 1, **dadurch gekennzeichnet, dass** das Lenkgetriebe (8) unabhängig von einer Linkslenkung oder einer Rechtslenkung des Chassis quer zur Fahrtrichtung (5) gesehen in einer von der jewelligen Position des Fahrerarbeltsplatzes (11) unabhängigen Lage am Fahrzeug befestigt ist.

4. Nutzfahrzeugchassis nach Anspruch 1, **dadurch gekennzeichnet, dass** der Fahrerarbeitsplatz (11) im Bereich der Vorderachse (2) angeordnet ist.

## Claims

1. A commercial vehicle chassis, the steering gear (8) of which is fastened to the vehicle in the region of a front axle (2), as seen in the direction of travel (5), is connected, in order to execute the steering actuation, via an articulated steering shaft (9) to a steering wheel (10) arranged on a temporary driver's workstation (11) and, irrespective of the vehicle being left-hand drive or right-hand drive, is fastened to the chassis in a position independent of the particular position of the driver's workstation (11), wherein, in order to compensate for a changeable distance of the steering wheel (10) from the steering gear (8), the articulated steering shaft (9) has a variable length by means of which the temporary driver's workstation (11) can be positioned on the left next to, in the centre between or on the right next to the longitudinal members (3; 6; 7) irrespective of where the steering gear (8) is arranged with regard to the longitudinal members (3; 6; 7) in the region of the front axle (2).

2. The commercial vehicle chassis according to Claim 1, **characterized in that** the steering gear (8) is arranged on a front axle (2).

3. The commercial vehicle chassis according to Claim 1, **characterized in that**, irrespective of the chassis being left-hand drive or right-hand drive, the steering gear (8) is fastened to the vehicle in a position which is independent of the particular position of the driver's workstation (11), as seen transversely with respect to the direction of travel (5).

4. The commercial vehicle chassis according to Claim 1, **characterized in that** the driver's workstation (11) is arranged in the region of the front axle (2).

## Revendications

1. Châssis de véhicule utilitaire, dont le boîtier de direction (8), vu dans la direction de conduite (5), est fixé au véhicule dans la région d'un essieu avant (2), est connecté à un volant de direction (10) disposé sur un poste de commande de conducteur (11) provisoire pour assurer la commande de direction par le biais d'un arbre de direction articulé (9) et est fixé au châssis indépendamment d'une direction à gauche ou à droite du véhicule dans une position indépendante de la position respective du poste de commande du conducteur (11), l'arbre de direction articulé (9) présentant une longueur variable pour la compensation d'une distance modifiable entre le volant de direction (10) et le boîtier de direction (8), grâce à laquelle longueur variable le poste de commande de conducteur (11) provisoire peut être positionné à gauche ou à droite à côté des longerons (3 ; 6 ; 7) ou centralement entre ceux-ci, indépendamment de l'endroit où le boîtier de direction (8) est disposé par rapport aux longerons (3 ; 6 ; 7) dans la région de l'essieu avant (2).

2. Châssis de véhicule utilitaire selon la revendication 1, **caractérisé en ce que** le boîtier de direction (8) est disposé sur un essieu avant (2).

3. Châssis de véhicule utilitaire selon la revendication 1, **caractérisé en ce que** le boîtier de direction (8), indépendamment d'une direction à gauche ou à droite du châssis, vu transversalement à la direction de conduite (5), est fixé sur le véhicule dans une position indépendante de la position respective du poste de commande de conducteur (11).

4. Châssis de véhicule utilitaire selon la revendication 1, **caractérisé en ce que** le poste de commande de conducteur (11) est disposé dans la région de l'essieu avant (2).
